# EUROPÄISCHE PATENTSCHRIFT

(11) **EP 0 400 345 B1**
(45) Veröffentlichungstag und Bekanntmachung des Hinweises auf die Patenterteilung: **11.08.1993**
(21) Anmeldenummer: 90108304.8
(22) Anmeldetag: 02.05.1990
(51) Int. Cl.: F16B 13/06, B21D 35/00, B21D 28/10

(54) **Verbindungselement**
Fixing element
Dispositif de fixation

(30) Priorität: 30.05.1989 CH 2022/89
(43) Veröffentlichungstag der Anmeldung: 05.12.1990
(73) Patentinhaber: USM U. SCHAERER SOEHNE AG, CH-3110 Münsingen (CH)
(72) Erfinder: Scherrer, Kurt, CH-3110 Münsingen (CH)
(74) Vertreter: Keller, René, Dr.

(56) Entgegenhaltungen:
- DE-A- 3 237 468
- DE-A- 3 426 288
- DE-A- 3 528 744
- GB-A- 11 612
- GB-A- 1 475 839
- US-A- 1 429 298

## Beschreibung

Die Erfindung betrifft ein in einem Loch eines Bauteils festklemmbares Verbindungselement, gemäß dem Oberbegriff des Patentanspruchs 1 und ein Verfahren zur Herstellung des Verbindungselements, gemäß dem Oberbegriff des Patentanspruchs 8.

Ein gattungsgemäßes Verbindungselement ist aus der DE-A 32 37 468 bekannt. Das bekannte Verbindungselement hat einen Bolzen und zwei keilförmige Hülsen. Der Bolzen hat an seinem einen Ende einen Bund und an seinem anderen Ende einen Gewindeabschnitt. Durch Aufdrehen einer sich an einem zu befestigenden Gegenstand abstützenden Mutter auf dem Gewindeabschnitt werden die Hülsen zusammengeschoben, indem sie auf ihren schrägen Mantelrändern gleiten. Beim Gleiten werden die Hülsen in Richtung ihrer längsten Mantellinie radial an die Bohrlochwand gepreßt. Um ein Zurückrutschen der am Bolzenbund anliegenden Hülse zu verhindern, ist an deren Keilspitze eine Verlängerung angeordnet, welche sich auf der Mutter abstützt. Beim Anziehen der Mutter bricht die Verlängerung oder wird ausgeknickt. Das bekannte Verbindungselement ist aufwendig in seiner Herstellung.

Aus der GB-A 14 75 839 ist ein aus Kunsstoff hergestelltes, weiteres gattungsgemäßes Verbindungselement bekannt. Dieses Verbindungselement hat zwei Verbindungsteilstücke, welche über Sollbruchstellen zusammen gehalten werden, welche beim Gegeneinanderziehen der in einem Loch steckenden Teilstücke aufbrechen. Das Gegeneinanderziehen erfolgt mit einer Schraube, welche durch das eine Teilstück durchgesteckt ist und mit ihrem Gewinde am anderen Teilstück angreift. Letzeres Teilstück hat nach dem Auseinanderbrechen zwei keilförmige Ansätze, welche in V-förmige Vertiefungen des ersten Teilstücks derart hineinziehbar sind, daß die V-förmigen Schenkel nach außen gegen die Lochwand gepreßt werden. Die Spreizwirkung dieses Verbindungselement hängt von Grad des Ineinanderziehens der beiden Teilstücke und dieses wiederum von der über die Schraube auf das zweite Teilstück aufzubringenden Kraft ohne Herausreißen des beim Eindrehen eingeschnittenen Gewindes im Kunststoff ab. Eine einigermaßen gute Halterung des Verbindungselements im Loch läßt sich nur mit guten "Fingespitzengefühl" erreichen.

Ein nicht gattungsgemäßes Verbindungselement ist in der CH-A-429 317 beschrieben und wird im Gestellbau zur Herstellung von Rohrverbindungen verwendet. Es besteht aus zwei gleichen Keilhülsen, die innerhalb eines an einem Verbindungskörper zu befestigenden Rohrendes mit ihren schrägen Gleitflächen aufeinander liegen. Durch eine in ein Gewinde des Verbindungskörpers einzuschraubende, durch die Hülsen hindurchgreifende Spannschraube werden die beiden Keilhülsen, da sie auf der der Gleitfläche abgekehrten Stirnseite am Verbindungskörper bzw. am Schraubenkopf anstehen, auf den Gleitflächen gleitend gegeneinander gezogen und hierdurch gegen die Innenfläche des Rohrendes gepreßt, wodurch das Rohrende mit dem Verbindungskörper verbunden ist.

Ein in der DE-C-35 23 155 beschriebenes, weiteres nicht gattungsgemäßes Verbindungselement unterscheidet sich von den eingangs genannten Arten durch eine einzige als Spreizhülse ausgebildete Hülse, die durch einen Spreizkonus, der mittels einer Spannschraube in sie hineinziehbar ist, aufgeweitet wird. Auch hier wird die Spannschraube in einen Verbindungskörper eingeschraubt, an dem die Speizhülse mit ihrer Stirnseite ansteht. Durch die Aufweitung wird diese Spreizhülse gegen die Innenfläche eines am Verbindungskörper zu befestigenden Rohrendes gepreßt.

Ein analoges, ebenfalls nicht gattungsgemäßes Verbindungselement wird in der DE-A-35 28 744 zur Verwendung als Wanddübel beschrieben. In Gegensatz zur DE-C-35 23 155 ist hier die Wandstärke dünner ausgeführt und ein zweiter Spreizschlitz mit einer Sollbruchstelle sowie zwei diametral gegenüberliegende Nasen, welche sich in der Bohrlochwand verkrallen, vorhanden.

Bei einem weiteren in der US-A-2,643,143 beschriebenen, nicht gattungsgemäßen Feststellelement für teleskopartig ausziehbare Rohre hat das eine Rohrende einen keilförmigen Ansatz, der in einen V-förmigen durchgehenden Ausschnitt einer mit dem Rohrende fluchtende Hülse mit im unbelasteten Zustand gleichem Außendurchmesser wie das Rohr eingreift. Die Hülse ist mit einem Spannbolzen verstiftet, der mit einer Druckfeder in das Rohrinnere gezogen wird. Der Spannbolzen kann mit einem Hebel gegen die Druckfederkraft achsial bewegt werden. Wird die Druckfeder entlastet, so kann das Rohrende in einem zweiten Rohr hin und her geschoben werden. Wirkt die Druckfeder, so wird die Hülse mit ihrem V-förmigen Ausschnitt auf den Ansatz gezogen und damit auseinandergespreizt, wodurch sie gegen die Rohrinnenwand des zweiten Rohres gepreßt wird. Hierdurch soll ein Verschieben der beiden Rohre gegeneinander verhindert werden.Das hier beschriebene Feststellelement bedingt aufwendige mechanische Arbeiten an einem der Rohre und eignet sich nur zur Verbindung zweier Rohre.

Weitere Verbindungseinrichtungen sind aus der US-A-3,945,743, der FR-A 2,278,978, der CH-A-488 120 und der US-A-3,815,198 bekannt.

Die oben aufgeführten Verbindungseinrichtungen und Verbindungselemente können entweder nur mit großer Spannkraft eingesetzt werden oder sind aufwendig in ihrem Herstellungsverfahren.

Hier will die Erfindung Abhilfe schaffen. Durch die Erfindung, wie sie im Patentanspruch 1 gekennzeichnet ist, wird die Aufgabe gelöst, ein einfach und preisgünstig herstellbares Verbindungselement zu schaffen, mit dem eine schnelle Montage ermöglicht wird.

Das erfindungsgemäße Verfahren zur Herstellung des Verbindungselements ist Gegenstand des Anspruchs 8.

Besondere Auführungsarten der Erfindung sind in den abhängigen Patantansprüchen angegeben, durch sie gelöste weitere Aufgaben und dadurch erreichte Vorteile gehen aus den folgenden Erläuterungen der Erfindung hervor.

Im folgenden werden Ausführungsbeispiele des erfindungsgemäßen Verbindungselements anhand der Zeichnungen näher erläutert. Es zeigen:
- Fig. 1: eine Seitenansicht auf ein an einem Verbindungskörper befestigtes und in einem Rohr festgeklemmtes Verbindungselement mit zwei Hülsen, wobei das Rohr in Schnitt dargestellt ist, um die Hülsen besser darstellen zu können,
- Fig. 2: eine diametral gegenüberliegende Seitenansicht einer Variante des Verbindungselements,
- Fig. 3: eine Rückansicht des in **Figur 2** dargestellten Verbindungselements,
- Fig. 4.: eine Seitenansicht einer weiteren Variante des Verbindungslements,
- Fig. 5.: eine Seitenansicht der Variante aus **Fig. 4**, gedreht um 90° und
- Fig. 6.: eine Seitenansicht der Variante aus **Fig. 4**, gedreht um 180°,
- Fig. 7: eine Draufsicht auf ein gestanztes und teilweise gebogenes Endstück eines Blechstreifens,
- Fig. 8: eine Draufsicht auf die Stirnseite einer Hülse nach einem ersten Biegevorgang in Blickrichtung VIII in
- Fig. 9: eine Draufsicht auf die Stirnseite einer Hülse nach einem zweiten an den ersten anschließenden Biegevorgang in Blickrichtung IX in **Figur 7**, wobei die vollständig gebogenen Hülsen in Station h.) entfernt wurden,
- Fig. 10: eine Draufsicht auf die Stirnseite einer Hülse nach Beendigung der Biegevorgänge in Blickrichtung X in **Figur 7**,
- Fig. 11: eine Seitenansicht einer Variante mit verzahntem, keilförmigem Ansatz und dazugehörendem, V-förmigem Ausschnitt benachbarter Hülsen,
- Fig. 12: eine diametral gegenüberliegende Seitenansicht der in **Figur 11** dargestellten Hülsen, und
- Fig. 13: einen teilweisen Schnitt durch eine Variante des Verbindungselements, bei dem die Spannschraube unverlierbar in Einschraubposition mit einer Klemmhülse gehalten wird.

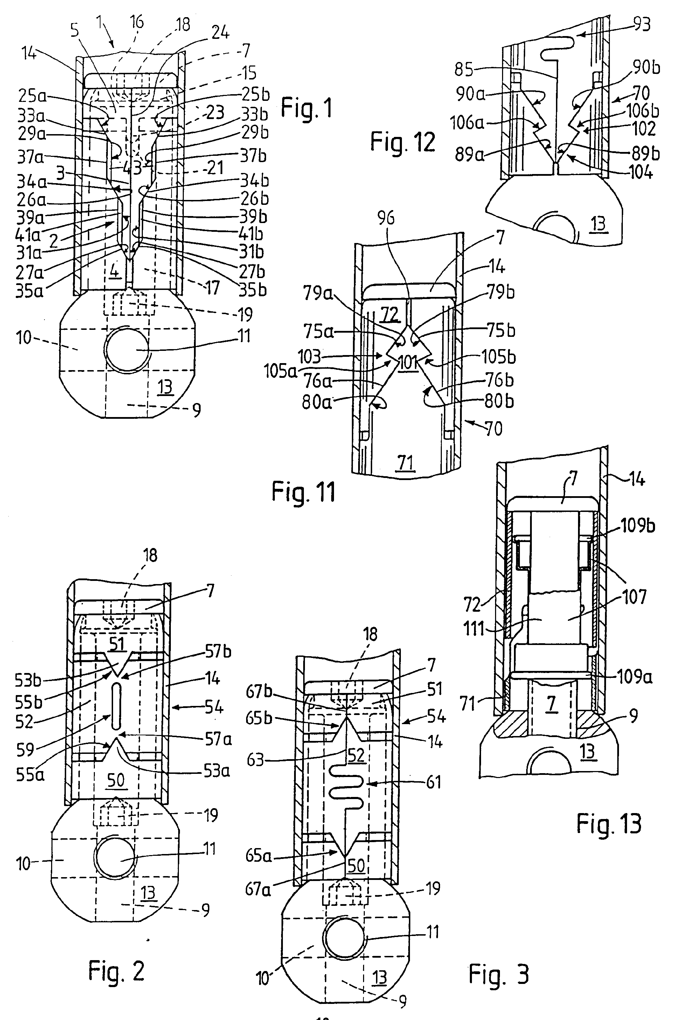

Das in **Figur 1** dargestellte Verbindungslement **1** hat je eine mit einem V-förmigen Ausschnitt **2** und mit einem keilförmigen Ansatz **3** versehene zylindrische Hülse **4** und **5**, sowie als Spannelement eine Spannschraube **7**, welche in ein Durchgangsgewinde **9** von insgesamt drei gleichen diagonalen Durchgangsgewinden **9**, **10** und **11** eines als kugelförmiger Verbindungskörper **13** ausgebildeten Bauteils eingeschraubt ist. Das Verbindungselement **1** verbindet ein Rohr **14** als weiteres Bauteil mit dem angrenzendes Verbindungskörper **13**. Um die Hülsen **4** und **5** besser zeigen zu können, ist das von der Hülse **4** gehaltenes Rohr **14** geschnitten dargestellt.

Die Spannschraube **7** hat am Schraubenkopf als Haltevorrichtung einen schmalen koaxialen Absatz **15**, der mit einem Wulst **16** in den Schraubenschaft **17** übergeht. Die Hülse **5** ist an ihrem oberen Ende derart um den Wulst **16** gebogen, daß sie mit einer Spielpassung um den Absatz **15** drehbar, aber nicht ohne Kraftanwendung abziehbar ist. Hierdurch ist die Spannschraube **7** mit der Hülse **5** unverlierbar verbunden. Das Gewinde der Spannschraube **7** ist passend zu den Gewinden **9**, **10** und **11**. Sowohl im Schraubenkopf, wie im Schraubenende ist je ein Innensechskant 18 bzw. **19** vorhanden. Der koaxiale Ansatz **15** und der Wulst **16** werden z. B. durch Abdrehen des Schraubenkopfes der Spannschraube **7** hergestellt.

Die Hülse **4** hat auf ihrer dem Ausschnitt 2 gegenüberliegenden Rückseite, wie in **Figur 1** gestrichelt dargestellt, eine Nut **21**, in die eine Zunge **23** der Hülse **5** als axiale Führung für beide Hülsen **4** und **5** greift.

Der Ansatz **3** sowie die gesamte Hülse **5** sind durch einen durch Fertigungsgegebenheiten, wie unten am Beispiel einer Variante des Verbindungselements **70** erläutert wird, bedingten Schlitz **24** durchtrennt. Der Ansatz **3** hat drei Keilflächenpaare **25a**, **25b**, **26a**, **26b**, **27a** und **27b**, wobei die Flächen **a** und **b** jedes der Flächenpaare **25**, **26** und **27** spiegelbildlich unter gleichem Winkel zur Ansatzachse geneigt sind. Die Flächenpaare **25** und **26** sind durch ein Kantenpaar **29**, dessen Kanten entlang von Mantellinien der Hülse **4** bzw. **5**, und die Flächenpaare **26** und **27** durch ein weiteres Kantenpaar **31**, dessen Kanten entlang von Mantellinien der Hülse **4** bzw. **5** verlaufen, getrennt. Das Flächenpaare **27a** und **b** läuft spitzwinklig zusammen.

Der Ausschnitt 2 ist analog zum Ansatz **3** ausgebildet, d. h. er hat zu den Keilflächenpaaren **25**, **26** und **27** ebenfalls drei Keilflächenpaare **33**, **34** und **35** mit gleichem Keilwinkel, die analog zu den Kantenpaaren **29a/b** und **31a/b** durch Kantenpaare **37a/b** und **39a/b** voneinander getrennt sind.

Die Kantenpaare **29** und **37** sowie **31** und **39** sind durch Zwischenräume **41a** und **41b** bzw. **43** entsprechend einer Spielpassung voneinander getrennt Die Keilflächen **25a/33a**, **25b/33b**, **26a/34a**, **26b/34b**, **27a/35a** und **27b/35b** hängen über eine Sollbruchstelle zusammen, welche von einem zum Stanzvorgang des der Verbindungselement **70** analogen Stanzvorganges herrührt. Durch diese Sollbruchstelle sind die beiden Hülsen **4** und **5** unverlierbar miteinander, d. h. auch mit der Spannschraube **7** verbunden. Erst beim Anziehen der Spannschraube **7** brechen die Sollbruchstellen. Je stärker der Ansatz **3** in den Ausschnitt **2** durch die Spannschraube **7** hineingedrückt wird, desto größer werden die Zwischenräume **41a** und **41b** bzw. **43** und desto stärker wird die Spreizhülse **4** gegen die Innenwand des Rohres **14** gepreßt. Im nicht zusammengepreßten Zustand ist der Durchmesser der Hülse **4** gerade so groß, daß sie zusammen mit der Hülse **5** mit großer Spielpassung in das Rohr **14** hineingeschoben werden kann.

Die Hülsen **4** und **5** bestehen aus Flachmaterial, die Form wird, wie unten beschrieben, aus flachem Blech ausgestanzt und anschließend zur Hülsenform gebogen. Die Keilwinkel der Keilflächenpaare **33**, **34** und **35** sowie der Kantenpaare **37** und **39** sind so groß gewählt, daß keine Selbsthemmung eintritt, damit nach Lösen der Spannschraube **7** der Ansatz **3** aus dem Ausschnitt 2 selbständig herausrutscht. Hierdurch wird die Verklemmung der Hülsen **4** und **5** mit der Rohrinnenfläche aufgehoben und das Verbindungselement **1** kann nach vollständigem Herausschrauben der Schannschraube **7** aus dem Verbindungskörper **13** aus dem Rohrende herausgezogen werden.

Anstelle der oben beschriebenen drei Keilflächenpaare **25**, **26** und **27** sowie **33**, **34** und **35** kann bei nicht allzu hoher Anpreßkraft nur mit einem Keilflächenpaar pro Ansatz und Ausschnitt gearbeitet werden, jedoch können sich dann im Herstellungsprozeß während des Biegens der Hülsen Probleme ergeben, da eventuell die Sollbruchstellen während des Biegevorgangs bereits brechen können und somit die Hülsen entlang ihrer Keilflächen auseinanderrutschen können, wodurch ebenfalls eine Unverlierbarkeit der einzelnen Verbindungselementteile nicht mehr gegeben wäre.

Anstelle der beiden Hülsen **4** und **5** können drei Hülsen **50**, **51** und **52** in einem Verbindungselement **54** verwendet werden; eine Seitenansicht, analog zu **Figur 1**, ist in **Figur 2** und eine Rückansicht in **Figur 3** dargestellt.

Die Hülsen **50** und **51** haben, wie in **Figur 2** dargestellt, je einen Ansatz **53a** bzw. **53b**, welcher in je einen Ausschnitt **55a** bzw. **55b** der Hülse **52** greift. Zwei weitere Ansätze **65a** und **65b** liegen entgegengesetzt an jeder der Hülsenstirnseiten der Hülse **52**. Die Ansätze **65a** und **65b** greifen in je einen Ausschnitt **67a** und **67b** der Hülsen **50** und **51**, wie in **Figur 3** dargestellt. Die Ansätze **53a** und **53b** sind im unmontierten Zustand analog zum Verbindungselement **1** mit den Ausschnitten **55a** und **55b** durch Sollbruchstellen noch vom Fertigungsvorgang her verbunden. Ebenfalls sind die beiden Ausschnitte **55a** und **55b** im unmontierten Zustand durch je einen Steg **57a** bzw. **57b** von einem Längsschlitz **59** getrennt. Nach der Montage im Rohr **14** brechen die Stege **57a** und **57b** beim Anziehen der Spannschraube **7** als Sollbruchstellen und die beiden Ausschnitte **55a** und **55b** sind über den Längsschlitz **59** miteinander verbunden; die Hülse **52** ist aufgebrochen.

In **Figur 3** ist eine Verzahnung **61** der Hülse **52** mit jeweils zwei Vorsprüngen, welche in jeweils zwei Vertiefungen der Gegenseite eingepreßt sind, zu sehen. Nach dem Aufbrechen der Stege **57a** und **b** werden die beiden Hälften der Hülse **52** durch diese Verzahnung **61** derart zusammengehalten, daß die beiden Hälften gegen die Innenfläche des Rohrs **14** preßbar sind, aber nicht auseinanderfallen. Die Trennungslinie **63** der Verzahnung **61** trennt ebenfall jeden der Ansätze **65a** und **65b** der Hülse **52**.

Bei im Rohr **14** montiertem Verbindungselement **54** werden durch Anziehen der Spannschraube **7** nach dem Brechen der Sollbruchstellen die drei Hülsen **50**, **51** und **52** gegeneinander gedrückt. Hierdurch schiebt sich der Ansatz **53a** in den Ausschnitt **55a** und der Ansatz **53b** in den Ausschnitt **55b** wodurch der Längsschlitz **59** der Hülse **52** auseinandergetrieben und die Hälften der Hülse **52** an die Innenfläche des Rohrs **14** gepreßt werden. Analog treiben die Ansätze **65a** und **65b** die Ausschnitte **67a** und **67b** der Hülsen **50** und **51** auseinander, wodurch die Hülsen **50** und **51** ebenfalls gegen die Innenfläche des Rohrs **14** gepreßt werden. Durch die vier Ansatze **53a** und **b**, sowie **65a** und **b** erfolgt ein gleichmäßiger Andruck der Hülsen **51** und **52** an die Innenfläche des Rohrs **14**, wobei die drei Hülsen **50**, **51** und **52** fluchtend aufeinanderstehen.

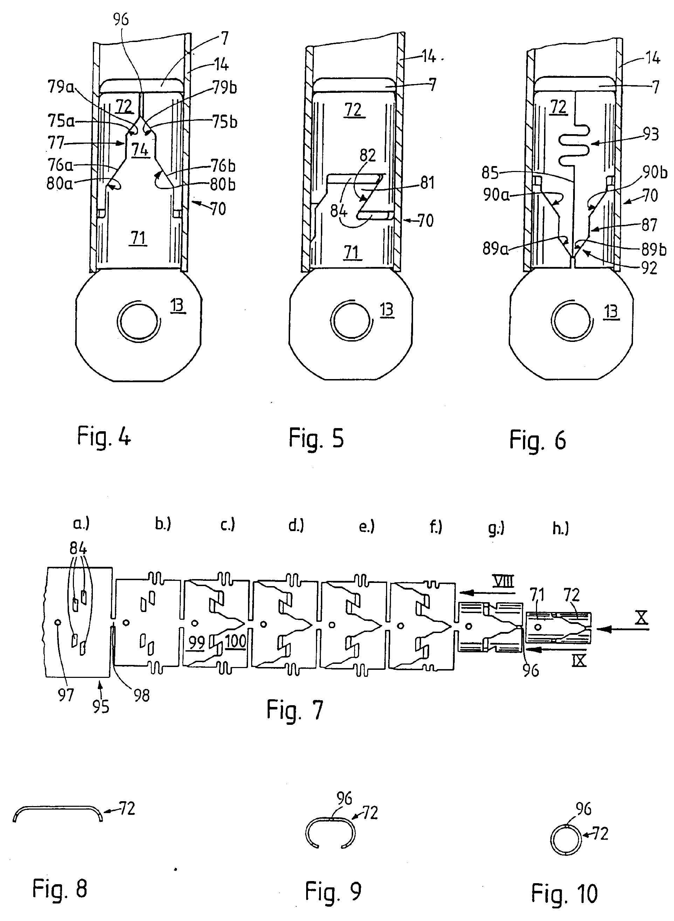

Eine weitere Variante eines Verbindungslements **70** mit zwei Hülsen **71** und **72** ist in den **Figuren 4**, **5** und **6** dargestellt. **Figur 4** zeigt die beiden Hülsen **71** und **72** analog zur Darstellung der beiden Hülsen **4** und **5** in **Figur 1**. Im Gegensatz zur Hülse **4** besitzt die Hülse **71** an ihrem Ansatz **74** nur zwei Keilflächenpaare **75a/b** und **76a/b** und die Hülse **72** an ihrem Ausschnitt **77** nur zwei Kantenpaare **79a/b** und **80a/b**. Die Hülse **72** ist ebenfalls an ihrem oberen Ende derart um den Wulst **16** der Spannschraube **7** gebogen, daß sie mit einer Spielpassung um den Absatz **15** drehbar, aber nicht abziehbar ist. Der keilförmige Ansatz und der V-förmige Ausschnitt an jeder Hülse sind einander diametral gegenüberliegend angeordnet.

**Figur 5** zeigt das Verbindungselmenet **70** in einer um 90° zur **Figur 4** gedrehten Lage. Das Rohr **7** ist in den Darstellungen der **Figuren 4 bis 6** geschnitten gezeichnet, um die Hülsen **71** und **72** besser zeigen zu können. Die Hülse **71** hat zwei Ansätze **81** (ein Ansatz **81** ist in **Figur 5** zu sehen), die in je eine Aussparung **82** (eine Aussparung **82** ist in **Figur 4** zu sehen) der Hülse **72** greifen. Die Ansätze **81** und die Aussparungen **82** sind annähernd symmetrisch, was jedoch für deren unten beschriebene Funktionsweise nicht zwingend notwendig ist, zum Ansatz **74** bzw. zum Ausschnitt **77** angeordnet. Zwischen dem Ende des Ansatzes **81** und dem Boden der Aussparung **82** befindet sich je ein Spalt **84**. Die Ansatz **81** erweitert sich zu seinem Ende und die Aussparung **82** zu ihrem Boden hin. Hierdurch liegen Ansatz **81** und Aussparung **82** unlösbar ineinander verzahnt; sie können aber um die Breite des Spaltes **84** aufeinander zu bewegt werden. Diese Breite ist so groß gewählt worden, daß sie um eine Toleranz größer ist als die maximale axiale Verschiebung der Hülsen **71** und **72** im unten beschriebenen Anpreßvorgang an die Innenfläche des Rohres **7**.

**Figur 6** zeigt das Verbindungslement **70** in einer um 180° zur **Figur 4** gedrehten Lage. Ein Längsschlitz **85** teilt einen Ansatz **87** der Hülse **72**, dessen Keilflächenpaare **89a/b** und **90a/b** mit gleicher Länge und gleichem Keilwinkel wie die Keilflächenpaare **75** und **76** ausgeführt sind. Analog sind die Kantenpaare im Ausschnitt **92** ausgeführt. Der Längsschlitz **85** geht, wie bereits bei der Hülse **52** beschrieben, in eine Verzahnung **93** mit je zwei Vorsprüngen und Vertiefungen über, deren Wirkungsweise gleich wie bei der Hülse **52** ist.

Bei Anziehen der Spannschraube **7** treibt der Ansatz **74** die Hülse **72** und der Ansatz **87** die Hülse **71** auseinander, wodurch beide Hülsen **71** und **72** gleichmäßig gegen die Innenfläche des Rohrs **14** gepreßt werden.

Die Herstellung der Verbindungselemente wird am Verbindungselement **70**, welches aus einem Stahlblechstreifen **95**, der von einer nicht dargestellten Rolle abgewickelt wird, in **Figur 7** erläutert. Seitliche Führungselemente des Blechstreifens **95** sind nicht dargestellt. Die einzelnen Bearbeitungsstationen sind in **Figur 7** mit den Buchstaben **a.)** bis **e.)** bezeichnet. **Station f.)** zeigt die gebogenen Hülsen **71** und **72**, wie sie mit Blick auf die Stirnseite der Hülse **72** in **Figur 8** dargestellt sind. Station **g.)** zeigt einen weiteren Biegevorgang, wobei der Blick auf die Stirnseite der Hülse **72** in **Figur 9** dargestellt ist; der Ausschnitt **77** wurde durch Durchtrennen eines Steges **96** aufgeschnitten. In der **Station h.)** sind die Hülsen **71** und **72** vollständig gebogen und mittels der Verzahnung **93** fest verzahnt. Mit Blick auf ihre Stirnseite ist die Hülse **72** in **Figur 10** dargestellt.

In der **Bearbeitungsstation a.)** werden in den Blechstreifen **95** die vier Spalte **84** und ein Transportloch **97** (es können auch mehrere verwendet werden) eingestanzt, in welches ein nicht dargestellter Stift greift, um den Blechstreifen von Station zu Station zu schieben.

In **Station b.)** werden die Ränder der abgewickelten Form **99** und **100** der Hülsen **71** und **72** so ausgestanzt, daß die Vertiefungen und Vorsprünge der Verzahnung **93** und ein Steg **98** zum Blechteil der **Station a.)** stehenbleibt; hierdurch wird die Stirnkante sowohl einer der Hülsen **72** (**Station a.)**), sowie die Stirnkante einer der Hülsen **71** (**Station b.)**) ausgestanzt.

In **Station c.)** werden die abgewickelten Formen **99** und **100** der beiden Hülsen **71** und **72** so gestanzt, daß ihre Trennlinie als Sollbruchstelle angebrochen ist, aber beide Formen noch zusammenhängen.

In **Station d.)** erfolgt nichts und in der **Station e.)** wird die durch den Stanzvorgang in **Station c.)** aus der Blechebene herausgedrückte Form **100** wieder in die Blechebene zurückgedrückt (Ausrichtstation); beide Formen haften noch immer zusammen. Die **Station d.)** wird benötigt, um den Stanzvorgang von **Station c.)** örtlich von der Ausrichtstation **e.)** zu trennen.

In **Station f.)** erfolgt ein erster Biegevorgang, in dem die beiden Formen **99** und **100** zu der in **Figur 8** mit Blick auf die Stirnfächen gezeigten Gestalt gebogen werden. Ein zweiter Biegevorgang erfolg in **Station g.)** zu der in **Figur 9** gezeigten Gestalt, wobei nach dem Biegen der Steg **96**, wie oben bereits angedeutet, durchtrennt wird.

In **Station h.)** werden die Formen **99** und **100** zu den Hülsen **71** und **72** gebogen und vom Blechstreifen **97** abgeschnitten. Beim vollständigen Rundbiegen werden die eine Preßpassung bildenden Vertiefungen und Vorsprünge der Verzahnung **93** fest ineinandergepreßt.

Durch den Ablauf dieses Bearbeitungsvorganges werden beide Hülsen **71** und **72** zusammen hergestellt. Erst nach dem erstmaligen Anziehen der Spannschraube **7** im Rohr **14** bricht die Trennlinie zwischen beiden Hülsen **71** und **72** vollständig auf. Beide Hülsen **71** und **72** sind über die beiden Ansätze **81** und Aussparungen **82** miteinander unlösbar verzahnt, aber axial derart verschiebbar, daß die Hülsen so weit ineinander schiebbar sind, daß sie fest gegen die Innenfläche des Rohres **14** preßbar sind. Da beide Hülsen **71** und **72** während des Biegevorganges mechanische über die Trennlinie hinweg verbunden sind, können sie nicht durch ihre Ansatze **74** und **87** aus den Ausschnitten **77** und **92** - deren Trennlinien noch nicht durchbrochen sind - auseinander getrieben werden.

Anstelle die Hülsen **3**, **4**, **50**, **51**, **52**, **71** und **72** aus Stahlbändern herzustellen, können auch andere elastische Materialien verwendet werden. Soll das Verbindungselement **1**, nur ein einziges Mal verwendet werden, können auch nicht elastische Materialien verwendet werden.

Auch die Hülsen **4** und **5**, sowie die Hülsen **50** und **52**, und die Hülsen **51** und **52** können analog der Hülsen **71** und **72** mit Ansätzen (analog **81**) und hierzu passenden Aussparungen (analog **82**) verklammert werden, um die Hülsen unverlierbar miteinander fluchtend zu halten. Auch kann der bzw. die keilförmigen Ansätze der einen Hülse mit dem bzw. den dazugehörenden V-förmigen Ausschnitten, wie in den **Figuren 11** und **12** anhand je eines zu den keilförmigen Ansätzen **74** und **87** sowie den V-förmigen Ausschnitten **77** und **92** der Hülsen **71** und **72** abgewandelten keilförmigen Ansatzes **101** und **102** sowie je eines abgewandelten V-förmigen Ausschnittes **103** und **104** dargestellt ist, mit einer Verzahnung **105a/b** und **106a/b** verzahnt sein. Die Aufgabe dieser Verzahnungen **105a/b** und **106a/b** wirkt analog einer Sollbruchstelle, wie sie oben beschrieben wurde, zwischen den Rändern des Ausschnitts **103** und dem Ansatz **101** sowie des Ausschnitts **104** und dem Ansatz **102**. Sollbruchstelle und Verzahnung haben die gleiche Aufgabe, die Hülsen unverlierbar zusammenzuhalten und während des Biegevorganges ein Auseinandergleiten der Hülsen an ihren Keilflächen zu vermeiden. Ein Vorteil der Verzahnung **105a/b** und **106a/b** gegenüber der Sollbruchstelle liegt in einer größeren Kraftübertragungsmöglichkeit über die Trennlinie hinweg sowie in gleichen Eigenschaften auch bei wiederholter Verwendung des Verbindungselements **70**. Die Verzahnung ist für die Unverlierbarkeit der Hülsen nicht zwingend erforderlich, da diese bereits durch die Ansätze **81** und **82** gewährleistet ist.

Anstelle am Spannschraubenkopf einen Wulst **16** anzubringen und hierum den benachbarten Hülsenrand zu biegen, kann auch ein Klemmelement zwischen Schraubengewinde und der Innenfläche einer der Hülsen **4, 5, 50, 51, 52**, **71** oder **72** verwendet werden. Das Klemmelement kann z. B. eine zwischen Schraubengewinde und Hülseninnenfläche elastisch verspannte Lochscheibe mit U-förmigen Querschnitt sein, wobei der eine Schenkel gegen das Schraubengewinde und der andere Schenkel gegen die Innenwand einer der Hülsen **4**, **5**, **50**, **51**, **52**, **71** oder **72** drückt. Vorteilhaft wird die Spannschraube **7** in einer bzw. in beiden Hülsen zentrisch unverlierbar gehalten, damit ein Einschrauben des Schraubengewindes in des Verbindungskörper **13** bei der Montage des Rohres **14** am Verbindungskörper **13** leicht durchführbar ist.

Anstelle die Spannschraube **7** unverlierbar mittels federnden Lochschieben oder einem eingebogenen, dem Schraubenkopf benachbarten Rand der Hülse zu halten, kann auch eine in **Figur 13** teiweise geschnitten dargestellte Klemmhülse **107** verwendet werden. An jedem Hülsenende hat die Klemmhülse **107** je einen Klemmring **109a** und **109b**, der gegen die Hülse **71** bzw. die Hülse **72** drückt. Die Klemmhülse **107** sitzt mit einer leichten Preßpassung in ihrem verengten Teil **111** auf dem Schaft der Spannschraube **7**. Die Klemmhülse **107** hält die Spannschraube **7** einerseits, wie oben erwähnt, unverlierbar in den beiden Hülsen **71** und **72**, und andererseits hält sie das Schraubengewinde in Einschraublage zum leichten Einschrauben in eines der Gewinde des Verbindungskörpers **13**.

Durch die Verklammerung benachbarter Hülsen miteinander und durch die Halterung der Spannschraube **7** in einer der Hülsen **4**, **5**, **50**, **51**, **52**, **71** oder **72** sind alle Teile des Verbindungselements **1**, **54** bzw. **70** unverlierbar in richtiger Montagelage miteinander verbunden, und können als ein einziges Bauteil in das Rohrende geschoben werden. Hierdurch verkürzt sich die Montagezeit des erfindungsgemäßen Verbindungselements wesentlich gegenüber den bekannten Verbindungselementen.

Die erfindungsgemäßen Verbindungselemente **1**, **54** und **70** sind leicht lösbar, d. h. die Verbindung kann immer wieder gelöst und erneut zur Verbindung anderer Rohre **14** mit Verbindungskörpern **13** verwendet werden.

Aufgrund des erfindungsgemäßen Herstellungsverfahrens lassen sich die Hülsen **4** und **5**, sowie **50**, **51** und **52** bzw. **71** und **72** äußerst preisgünstig aus einem Blechstreifen **95** herstellen. Durch den Stanzvorgang ergibt sich eine derart gute Oberfläche der Keil- und Kantenflächen, daß deren Nachbearbeitung zur Verbesserung ihres Aufeinandergleitens nicht mehr nötig ist. Auch wurde die Konstruktion und das Herstellungsverfahren derart konzipiert, daß sämtliche Hülsen **4**, **5**, **50**, **51**, **52**, **71** und **72** des Verbindungselements **1**, **54** bzw. **70** gleichzeitig zusammen und bereits verklammert herstellbar sind. Da auch noch die Spannschraube **7** in einer der Hülsen **4**, **5**, **50**, **51**, **52**, **71** bzw. **72** unverlierbar in Montatgelage gehalten wird, eignet sich das erfindungsgemäße Verbindungselement **1**, **54** bzw. **70** zur schnellen und problemlosen Durchführung von Rohrverbindungen.

Die überraschend gute Klemmwirkung der Hülse **4** im Rohr **14** und die geringe Spannkraft der Spannschraube **7** rührt davon her, daß der Ansatz **3** mit über seiner gesamten Länge verteilten Keilflächenpaaren **25**, **26** und **27** den Ausschnitt **2** auseinandertreibt. Hierdurch wird die zylindrische Hülse **4** über ihre gesamte Länge gleichmäßig aufgeweitet und liegt somit mit ihrer gesamten Umfangsfläche an der Rohrinnenwand an. Hierdurch ergibt sich eine große gleichmäßige Haftreibung. Analoges gilt für die Ansätze **74** und **87** der Hülsen **71** und **72**, sowie für die Kielflächen **53a**, **53b** sowie **65a**, **65b**, wobei bei der letzteren Ausführungsart anstelle mehrere Keilflächenpaare an einem Ansatz, mehrere Ansätze vorhanden sind.

Die geringe aufzubringende Spannkraft der Spannschraube **7** ist darauf zurückzuführen, daß nur eine elastische Biegekraft der dünnwandigen Hülsen 4 und **5**, bzw. **50**, **51** und **52** sowie **71** und **72** überwunden werden muß. Der Haupteil der Spannkraft wird zum Anpressen der Hülsen gegen die Innenwandung verwendet.

Bevorzugt wird das Verbindungselement bei der Herstellung von Regalen, Verkaufständen, Stellagen und dgl. Rohrkonstruktionen verwendet. Es kann aber auch als sog. Spreizdübel zum Befestigen von z. B. Türen in einem Bohrloch eines Türrahmen, benützt werden.

## Patentansprüche

1. Im Loch eines Bauteils, bevorzugt im Innenraum eines Rohrs **(14)**, festklemmbares Verbindungselement **(1)** zum Verbinden eines angrenzenden zweiten Bauteils **(13)**, mit mindestens zwei schräge Mantelränder aufweisenden, unverlierbar miteinander, wenigstens annähernd fluchtend gehaltenen Hülsen **(4, 5; 50, 51, 52; 71, 72)**, die mittels eines zentralen Spannelements **(7)** axial gegeneinander verschiebbar sind, um durch Keilwirkung der schrägen Mantelränder an die Lochinnenseite angepreßt zu werden, **dadurch gekennzeichnet**, daß die Hülsen **(4, 5; 50, 51, 52; 71, 72)** derart aus einem Blechstück **(99, 100)** gebogen sind, daß vor dem Biegen einander gegenüberliegende Blechrandteile im gebogenen Zustand nebeneinanderliegend einen durchgehenden Längsschlitz **(63, 85)** bilden.

2. Verbindungselement nach Anspruch 1, **dadurch gekennzeichnet**, daß die Hülsen **(71, 72)** durch eine gegenseitige Verzahnung **(81, 82, 84)** derart aneinander gehalten sind, daß ein axiales Gegeneinanderbewegen möglich, aber ein axiales Auseinanderbewegen begrenzt ist.

3. Verbindungselement nach Anspruch 1 oder 2, **dadurch gekennzeichnet**, daß jede der Hülsen **(4, 5; 50, 51, 52; 71, 72)** an einer Seite einen keilförmigen Ansatz **(3, 53a/b; 65a/b; 101, 102)** und an der gegenüberliegenden Seite einen V-förmigen Ausschnitt **(2, 55a/b; 67a/b; 103, 104)** hat, wobei der keilförmige Ansatz **(3, 53a/b; 65a/b; 101, 102)** der einen Hülse in den V-förmigen Ausschnitt **(2, 55a/b; 67a/b; 103, 104)** der benachbarten Hülse greift und der V-förmige Ausschnitt die Hülse in Längsrichtung gänzlich durchtrennt oder in einen Trennschlitz oder in eine Trennsollbruchstelle übergeht, so daß jede der Hülsen beim Einschieben des keilförmigen Ansatzes der benachbarten Hülse in ihren V-förmigen Ausschnitt aufgespreizt wird.

4. Verbindungselement nach einem der Ansprüche 1 bis 3, **dadurch gekennzeichnet**, daß jeweils eine von zwei benachbarten Hülsen **(4, 5; 50, 51, 52; 71, 72)** beidseits des Längsschlitzes **(63, 85)** je einen als Keilteil ausgebildeten Ansatzteil hat, wobei die Ansatzteile unter der Keilwirkung beim Anziehen des bevorzugt als Spannschraube **(7)** ausgebildeten Spannelements aneinander gepreßt werden.

5. Verbindungselement nach einem der Ansprüche 1 bis 4, **dadurch gekennzeichnet,** daß der eine Blechrand des Längsschlitzes **(63, 85)** wenigstens einen Vorsprung und der andere Blechrand wenigstens eine zum Vorsprung passende Vertiefung aufweist, um die Blechränder ineinander verklammert **(61, 93)** zu halten.

6. Verbindungselement nach einem der Ansprüche 1 bis 5, **dadurch gekennzeichnet**, daß das Spannelement **(7)** an wenigstens einer der Hülsen **(4, 5; 50, 51, 52; 71, 72)** unverlierbar, bevorzugt zentrisch an ihren gewindefreien Bereich, gehalten ist.

7. Verbindungselement nach einem der Ansprüche 1 bis 6, **dadurch gekennzeichnet**, daß die Hülsen **(71, 72)** gemeinsam eine Zylinderform bilden, so daß sie als Ganzes in das Loch des ersten Bauteils **(14)** einführbar sind.

8. Verfahren zur Herstellung des Verbindungselements nach einem der Ansprüche 1 bis 7, **dadurch gekennzeichnet**, daß aus ebenem Blech **(95)** eine abgewickelte Form **(99, 100)** benachbarter Hülsen **(71, 72)** derart gestanzt wird, daß die beiden Hülsen beim Biegevorgang nicht entlang ihrer Trennungslinie zwischen dem jeweiligen keilförmigen Ansatz und dem dazugehörenden V-Ausschnitt auseinander gleiten.

9. Verfahren nach Anspruch 8, **dadurch gekennzeichnet**, daß an der Trennungslinie der abgewickelten Form **(99, 100)** Öffnungen **(84)** ausgestanzt werden, deren Abmessungen derart gewählt sind, daß benachbarte Hülsen **(71, 72)** zum Aufspreizen axial schiebbar, jedoch unlösbar miteinander verzahnt sind.

## Claims

1. Connection element (1) which can be clamped in the hole of a structural component, preferably inside a tube (14), for connecting an adjacent second structural component (13), having at least two sleeves (4, 5; 50, 51, 52; 71, 72) which comprise oblique casing edges, which are held together undetachably in an at least approximately aligned manner, and which can be moved axially with respect to one another by means of a central clamping element (7), in order to be pressed against the hole interior by the wedge effect of the oblique casing edges, characterised in that the sleeves (4, 5; 50, 51, 52; 71, 72) are curved out of a sheet metal piece (99, 100) in such a way that edge sections of the sheet metal which, before bending, lie opposite one another are adjacent one another in the curved state and form a continuous elongate slot (63, 85).

2. Connection element according to Claim 1, characterised in that the sleeves (71, 72) are held against each other by a mutual tooth arrangement (81, 82, 84) in such a way that they can be moved axially towards one another but axial movement away from one another is restricted.

3. Connection element according to Claim 1 or 2, characterised in that each of the sleeves (4, 5; 50, 51, 52; 71, 72) comprises on one side a wedge-shaped attachment (3, 53a/b; 65a/b; 101, 102) and on the opposite side a V-shaped cut-out (2, 55a/b; 67a/b; 103, 104), wherein the wedge-shaped attachment (3, 53a/b; 65a/b; 101, 102) of one sleeve engages in the V-shaped cut-out (2, 55a/b; 67a/b; 103, 104) of the adjacent sleeve and the V-shaped cut-out completely separates the sleeve in the longitudinal direction or merges into a separating slot or into a predetermined separating breaking point such that each of the sleeves is spread open when the wedge-shaped attachment of the adjacent sleeve is inserted in the V-shaped cut-out thereof.

4. Connection element according to any one of Claims 1 to 3, characterised in that in each case one of two adjacent sleeves (4, 5; 50, 51, 51; 71, 72) on each side of the elongate slot (63, 85) has a coupling piece in the form of a wedge section, the coupling pieces being pressed against each other under the wedge effect when the clamping element, preferably in the form of a clamping screw (7), is tightened.

5. Connection element according to any one of Claims 1 to 4, characterised in that one sheet metal edge of the elongate slot (63, 85) comprises at least one projection and the other sheet metal edge comprises at least one recess matching the projection in order to hold the sheet metal edges clamped in one another (61, 93).

6. Connection element according to any one of Claims 1 to 5, characterised in that the clamping element (7) is held undetachably on at least one of the sleeves (4, 5; 50, 51, 52; 71, 72) preferably centrally on the smooth area thereof.

7. Connection element according to any one of Claims 1 to 6, characterised in that the sleeves (71, 72) together form a cylindrical shape such that they can be inserted as a unit into the hole of the first structural component (14).

8. Method of producing the connection element according to any one of Claims 1 to 7, characterised in that an evolute shape (99, 100) of adjacent sleeves (71, 72) is stamped out of a flat metal sheet (95) in such a way that during the bending process the two sleeves do not slide apart from one another along their separation line between the respective wedge-shaped attachment and the associated V-shaped cut-out.

9. Method according to Claim 8, characterised in that there are stamped on the separation line of the evolute shape (99, 100) apertures (84) of which the dimensions are selected such that adjacent sleeves (71, 72) are toothed such that they are axially displaceable in order to be spread apart but are undetachable.

## Revendications

1. Élément de liaison (1), susceptible d'être bloqué par serrage, dans un trou d'élément de construction, de préférence dans l'espace intérieur d'un tube (14), en vue d'assurer la liaison avec un deuxième élément de construction (13) voisin, avec des douilles (4, 5; 50, 51, 52; 71, 72), présentant au moins deux bords à génératrices inclinées,maintenues ensemble de manière imperdable et au moins à peu près alignées et déplaçables axialement les unes par rapport aux autres au moyen d'un élément de serrage central (7), afin d'être pressées sur la face intérieure du trou par un effet de coin des bords des génératrices inclinés, caractérisé en ce que les douilles (4, 5; 50, 51, 52; 71, 72) sont formées par cintrage, à partir d'une pièce en tôle (99, 100),et en ce qu'avant le cintrage, des parties de bordure de tôle, opposées les unes aux autres, forment, à l'état cintré, une fois placées les unes à côté des autres, une fente allongée (63, 85) continue.

2. Élément de liaison selon la revendication 1, caractérisé en ce que les douilles (71, 72) sont maintenus les unes contre les autres au moyen d'une denture (81, 82, 84) mutuellement complémentaire, de telle façon que soit possible un déplacement mutuel d'approche axial, mais qu'un déplacement mutuel d'écartement soit limité.

3. Élément de liaison selon la revendication 1 ou 2, caractérisé en ce que chacune des douilles (4, 5; 50, 51, 52; 71, 72) présente, sur une face, un appendice (3, 53a/b; 65a/b; 101, 102) en forme de coin, et, sur la face opposée, une découpe (2, 55a/b; 67a/b; 103, 104) en forme de V, l'appendice (3, 53a/b; 65a/b; 101, 102) en forme de coin d'une douille venant s'engager dans la découpe (2, 55a/b; 67a/b; 103, 104) en forme de V de la douille voisine et la découpe (2, 55a/b; 67a/b; 103, 104) en forme de V traversant entièrement la douille en direction longitudinale ou se transformant en une fente de séparation ou en un point destiné à la rupture avec séparation, de telle façon que chacune des douilles soit écartée lors de l'insertion de l'appendice en forme de coin de la douille voisine à l'intérieur de sa découpe en forme de V.

4. Élément de liaison selon l'une des revendications 1 à 3, caractérisé en ce que, chaque fois, une sur deux de deux douilles (4, 5; 50, 51, 52; 71, 72) voisines présente respectivement, des deux côtés de la fente allongée (63, 85), une partie d'appendice réalisée sous forme de partie en coin, où les parties en coin sont pressées l'une contre l'autre sous l'effet exercé lors du serrage de l'élément de serrage, réalisé de préférence sous forme de vis (7).

5. Élément de liaison selon l'une des revendications 1 à 4, caractérisé en ce que l'une des bordures de tôle de la fente allongée (63, 85) présente au moins une saillie et l'autre présente au moins un enfoncement s'adaptant à la saillie, afin de maintenir imbriquées (61, 93) l'une dans l'autre les bordures de tôle.

6. Élément de liaison selon l'une des revendications 1 à 5, caractérisé en ce que l'élément de serrage (7) est maintenu de façon imperdable sur au moins l'une des douilles (4, 5; 50, 51, 52; 71, 72), de préférence centré sur sa zone non filetée.

7. Élément de liaison selon l'une des revendications 1 à 6, caractérisé en ce que les douilles (71, 72) forment conjointement une forme cylindrique, de telle façon qu'elles soient susceptibles d'être introduites comme un tout dans le trou du premier élément de construction (14).

8. Procédé de fabrication de l'élément de liaison selon l'une des revendications 1 à 7, caractérisé en ce qu'à partir d'une tôle plane (95), on opère un estampage d'une forme (99,100) déroulée de douilles (71, 72) voisines, et en ce que, lors du processus de cintrage, les deux douilles ne glissent pas le long de leur ligne de séparation entre l'appendice en forme de coin respectif et la découpe forme de V correspondante.

9. Procédé selon la revendication 8, caractérisé en ce que, sur la ligne de séparation de la forme (99, 100) déroulée, sont estampées des ouvertures (84), dont les dimensions sont choisies de telle façon que des douilles (71, 72) voisines soient susceptibles de coulisser axialement en vue d'un écartement, mais sont cependant imbriquées l'une dans l'autre de façon imperdable.
